# EUROPÄISCHE PATENTSCHRIFT

(11) **EP 2 096 054 B1**
(45) Veröffentlichungstag und Bekanntmachung des Hinweises auf die Patenterteilung: **20.04.2011**
(21) Anmeldenummer: 08003848.2
(22) Anmeldetag: 29.02.2008
(51) Int. Cl.: B65G 47/34, B65G 47/90, B64F 1/32, B66F 9/14

(54) **Handhabungsvorrichtung für Stückgut, insbesondere Flugfracht**
Handheld device for freight, particularly air freight
Dispositif de manipulation pour marchandises au détail, en particulier cargo

(43) Veröffentlichungstag der Anmeldung: 02.09.2009
(73) Patentinhaber: Kratzmaier, Erich, 82547 Eurasburg (DE)
(72) Erfinder: Kratzmaier, Erich, 82547 Eurasburg (DE)
(74) Vertreter: Szynka, Dirk

(56) Entgegenhaltungen:
- DE-A1- 1 431 503
- DE-A1- 3 017 164
- DE-B- 1 105 343
- FR-A- 2 186 420
- US-A1- 2008 199 292

## Beschreibung

Die vorliegende Erfindung bezieht sich auf eine Handhabungsvorrichtung für Stückgut.

Beim Umgang mit zu transportierenden und zu verladenden Stückgütern ist der Einsatz motorischer und automatischer Vorrichtungen bzw. Roboter zum Ersetzen menschlicher Arbeitskraft von Interesse. Dies betrifft je nach Anwendungsbereich die Arbeitsgeschwindigkeit, die Zuverlässigkeit, die Vermeidung von Gefahren, oder gesundheitlichen Schäden, die Wirtschaftlichkeit oder andere Motivationen.

Von besonderem Interesse für die vorliegende Erfindung sind Flugfrachtstücke, insbesondere Fluggepäckstücke von Passagierflugzeugen. Hier tritt die Handhabung des einzuladenden oder auszuladenden Gepäcks als wesentliches zeitliches logisdsches und technisches Problem in Erscheinung. Wegen der erheblichen und im Laufe der technischen Entwicklung tendenziell zunehmenden Größe von Flugzeugen seinerseits und des Komfortinteresses der Passagiere sowie des betriebswirtschaftlichen Interesses an Zeiteinsparungen andererseits und schließlich auch im Hinblick auf die Notwendigkeit einer fehlerlos durchorganisierten Handhabung einzuladenden und auszuladenden Gepäcks im Hinblick auf Sicherheit und zutreffende Zuweisung werden in diesem Bereich hohe Anforderungen gestellt. Im Wesentlichen kommen maschinelle Anlagen mit Förderbändern zum Transport und menschliche Arbeitskräfte zum Einladen und Entladen zum Einsatz. Es sind sowohl spezielle Fluggepäckbehälter bekannt, die bereits im Gepäckbereich des Flughafens beladen werden und In der beladenen Form als kompletter Behälter In das Flugzeug eingeladen und auch wieder ausgeladen werden, als auch Transportwagen, die lediglich zum Transport des Gepäcks vom Gepäckbereich zum Flugzeug dienen und dort zum Beladen des Flugzeuges wieder entladen werden müssen.

Die DE 30 17 164 A1 zeigt eine Lastaufnahmevorrichtung für ein Regalstapelfahrzeug, die durch eine gegenüber dem Regalstapelfahrzeug drehbare und in drei Raumrichtungen verschiebbare Lagerung eine Feinpositionierung von zwei Gabelzinken erlaubt. Dabei ist auch eine Seitwärtsbewegung der Gabelzinken möglich, die dazu entweder an einem in Profilschienen bewegbaren Schlitten hängend gelagert sind oder auf der übrigen Lastaufnahmevorrichtung aufliegend und durch einen Teleskopmechanismus seitlich ausfahrbar vorgesehen werden.

Die US 2008/0199292 A1 zeigt ein führerloses Stapelfahrzeug mit sechs Gabelzinken, die jeweils paarweise quer zur Zinkenrichtung verschiebbar und auf diese Weise an unterschiedliche Palettentypen anpassbar sind.

Die FR 2 188 420 A offenbart ein auf Schienen geführtes Stapelfahrzeug mit ausschwenkbaren Gabelzinken, das beim Heben schwerer Lasten mit einer seitlichen Stützeinrichtung stabilisiert wird.

Die DE 14 31 503 A1 zeigt ebenfalls ein Stapelfahrzeug für das seitliche Heben groβer Lasten, an dem starr verbunden ein Hubmast vorgesehen ist.

Die DE 11 05 343 B offenbart eine Tragplatte für einen Hubwagen, die beidseits ausgeschwenkt werden kann.

Der vorliegenden Erfindung liegt das Problem zugrunde, verbesserte Möglichkelten zur Handhabung von Stückgütern, insbesondere zum Einladen von Fluggepäck anzugeben.

Zum einen richtet sich die Erfindung auf eine Vorrichtung nach Anspruch 1-16, zum anderen richtet sie sich auf bevorzugte Verwendungen dieser Vorrichtung gemäß den Ansprüchen 17 bis 19 und schließlich auch auf eine die Vorrichtung beinhaltende Anlage nach den Ansprüchen 20 - 23.

Die abhängigen Ansprüche geben bevorzugte Ausgestaltungen der Erfindung an. Die einzelnen Merkmale können dabei für verschiedene Erfindungskategorien von Bedeutung sein, und zwar für die Handhabungsvorrichtung und die Gesamtanlage. für die Verwendung beider, aber auch für Verfahren zur Handhabung von Stückgütern und insbesondere Flugfracht.

Die Erfindung betrifft primär eine Handhabungsvorrichtung für Stückgüter, die sich durch eine besondere Untergreifeinrichtung auszeichnet. Die Untergreifeinrichtung ist dazu ausgelegt, die Stückgüter zu untergreifen und zu tragen. Sie ist dazu aus der Handhabungsvorrichtung bzw. einem im Folgenden Handhabungskopf bezeichneten Teil seitlich ausfahrbar und in diesen einfahrbar. Damit kann auf der Untergreifeinrichtung liegendes Stückgut bei Bedarf durch Einfahren der Untergreifrichtung abgestreift werden und auf einem bestimmten Platz abgelegt oder abgeworfen werden. Gleichzeitig ist die in der Richtung dieser Ein- und Ausfahrbewegung gemessene Länge des Handhabungskopfes mit der Untergreifeinrichtung durch das Ein- und Ausfahren variabel. Beim 'Abstreifen' wird diese Länge also reduziert im Unterschied zu einer ebenfalls denkbaren, aber nicht erfindungsgemäßen Ausgestaltung mit einer festen unbeweglichen Untergreifeinrichtung und darauf beweglichem Abstreiforgan. Das hat den Vorteil, dass die Vorrichtung in ihrer Länge auch auf beengte Raumverhältnisse angepasst werden kann und insbesondere im nicht beladenen Zustand auch unter sehr eingeschränkten räumlichen Bedingungen bewegt werden kann. Darüber hinaus kann die Untergreifeinrichtung bei geeigneter Ausgestaltung je nach zu handhabendem Stückgut an dessen Maße angepasst werden und damit auf die benötigte und keine unnötig große Länge eingestellt sein.

Eine bevorzugte Ausgestaltung der Untergreifeinrichtung weist eine Mehrzahl Finger auf bzw. besteht vorzugsweise aus diesen Fingern. Der Begriff 'Finger' bezeichnet dabei in der Längenrichtung ein- und ausfahrbare Elemente, die jedenfalls in ganz ausgefahrenem Zustand länger als ihre Quermaße sind. Die Finger müssen jedoch nicht notwendigerweise (wie anatomische Finger) gelenkig ausgestaltet sein.

Die Untergreifeinrichtung mit den Fingern ist vorzugsweise in der Breite verstellbar, also senkrecht zur bereits erwähnten Längsrichtung, wobei ebenfalls vorzugsweise die Abstände zwischen den Fingern vergrößert werden und die Fingerzahl konstant bleibt. Die Finger werden also vorzugsweise aufgespreizt und zusammengeführt, um die Breite der Untergreifeinrichtung einzustellen. Hierzu sind die einzelnen Finger einschl. der Vorrichtungen zum Ausfahren und Einfahren vorzugsweise auf einer quer zu der Ein- und Ausfahrrichtung verlaufenden Linearführung verschiebbar montiert. Eine entsprechende Breiteneinstellung ist auch bei anderen Ausführungen der Untergreifeinrichtung zu bevorzugen.

Alternativ oder zusätzlich kann es Vorteile haben, die Ein- und Ausfahrbewegung der Finger gruppenweise steuern zu können, also nicht nur für alle Finger gleichzeitig. Vorzugsweise bestehen die Gruppen aus Einzelfingern, können also die Finger jeweils einzeln angesteuert werden. Dadurch kann eine effektive Breiteneinstellung bewirkt werden, indem nämlich nur eine der benötigten Breite entsprechende Zahl von Fingern verwendet wird.

Eine günstige Ausführungsform sind Teleskopmechanismen, mit denen sich die Finger ein- und ausfahren lassen. Alternativ dazu kann es sich bei den Fingern um einseitig rollbare Gliederketten handeln, wie sie beispielsweise vom Schutz von Kabelsträngen bekannt sind. Diese Gliederketten können dann im Inneren des Handhabungskopfes aufgerollt werden, wenn sie eingefahren werden, und zum Ausfahren abgerollt werden. Die einseitige Rollbarkeit führt dann dazu, dass die Gliederkette im ausgerollten Zustand bei Schwerkraftbelastung trägt, also nur entgegen der Schwerkraft aufrollbar ist.

Bei beiden Varianten können zusätzlich krallenartige Konstruktionen am distalen Ende der Finger vorgesehen sein, die entgegen der Schwerkraft aufwärts gebogen sind. Solche 'Krallen' lassen sich zum Beispiel realisieren durch pneumatische Faltenbälge, die durch Druckluft ausgefahren und/oder aufgebogen werden können und damit, wie auch andere Krallenkonstruktionen, ein Abgleiten der Stückgüter zur distalen Seite der Finger hin verhindern können.

Wie bereits erwähnt ist die Untergreifeinrichtung vorzugsweise aus einem nicht die gesamte Handhabungsvorrichtung ausmachendem Teil ausfahrbar, das als Handhabungskopf bezeichnet wird. Dieser Handhabungskopf hat vorzugsweise selbst ebenfalls Bewegungsfreiheitsgrade und zwar im Sinne einer zumindest im Wesentlichen in einer horizontalen Ebene ablaufenden Schwenkbewegung. Dazu kann der Handhabungskopf über zwei horizontal beabstandete Gelenke mit jeweils vertikaler Achse montiert sein, wobei jedes Gelenk einen Schwenkbereich von (mindestens) 90° zur Verfügung stellt, insgesamt also (mindestens) 180° Schwenkbereich existieren. Die Untergreifeinrichtung bzw. die Finger können dann beispielsweise nach links oder nach rechts oder geradeaus oder in Zwischenstellungen dazwischen gerichtet werden.

Diese Ausführungsform ist vorzugsweise mit einem gemeinsamen Druckfluidantriebszylinder oder einem anderen Antriebszylinder, etwa einem elektromagnetischen Linearmotor, versehen. Die Gelenke können durch eine Querplatte verbunden sein, wobei eines der Gelenke und die Querplatte bei einer Schwenkbewegung um das andere mit verschwenkt wird. Das andere Gelenk und die Querplatte werden bei einer Schwenkbewegung um das erstgenannte nicht mit verschwenkt und bleiben unbewegt. Die Gelenke und die Querplatte bilden gemeinsam eine einmotorige Doppelgelenkklappkonstruktion. Zur Veranschaulichung wird auf das Ausführungsbeispiel verwiesen.

In diesem Zusammenhang wird bei dem jeweils aktiven Gelenk eine Verriegelung betätigt, wozu eine Stiftverriegelung in Betracht kommt. Damit bewegt der Antriebszylinder den Handhabungskopf immer mit der Seite schwenkend, an der die Verriegelung gerade freigegeben ist.

In diesem Zusammenhang kann es von Vorteil sein, den Handhabungskopf zusätzlich abzustützen, wenn er an dem Teil, an dem er montiert ist, anliegt, etwa in einer Mittelstellung der hier erläuterten Schwenkbewegungen. Dabei kann ein Kugelgelenkauflauflager eingesetzt werden, von dem der Handhabungskopf bei den Schwenkbewegungen abgezogen wird und auf das er bei der Rückkehrbewegung wieder aufgeschoben wird.

Die erfindungsgemäße Handhabungsvorrichtung kann insgesamt verfahrbar sein, und zwar vorzugsweise über ein Bodenfahrzeug statt über einen Kran oder eine ähnliche hängende Konstruktion.

Das Bodenfahrzeug kann ein Schienenwagen sein, der selbstständig angetrieben oder von einem externen Antrieb gezogen oder geschoben über Schienen verfahren wird. Auf dem Bodenfahrzeug bzw. Schienenwagen ist gemäß einer Ausgestaltung ein Hubturm, etwa nach der Bauart eines Scherenhubturms, aufgesetzt, der eine vertikale Verstellbewegung bietet. Auf dem Hubturm wiederum kann ein horizontaler Hebelarm montiert sein, der seinerseits wiederum vorzugsweise eine weitere horizontale Verstellmöglichkeit aufweist. Beispielsweise kann er einen Teleskopmechanismus aufweisen. Dabei kann es günstig sein, diesen zu verkleiden, etwa mit einer Balgenwand, um Störungen des Teleskopmechanismus oder anderer horizontaler Verstellkonstruktionen durch Stückgüter bzw. umgekehrt eine Beschädigung von Stückgütern durch diese Konstruktionen zu vermeiden.

Die entsprechend ausgestaltete Handhabungsvorrichtung eignet sich besonders zum Einsatz in Anlagen mit Transportbändern, über die die Stückgüter transportiert werden. Dies betrifft insbesondere ein Abnehmen der Stückgüter von den Transportbändern zum weiteren Transport, etwa zum Einladen in einen speziellen Behälter. Die Schienenrichtung bzw. allgemeiner zumindest eine der Bewegungsrichtungen des Bodenfahrzeugs verläuft dabei günstigerweise senkrecht zu der Transportrichtung der Bänder.

Die Bänder wiederum können Stegoberflächen aufweisen, die zu den erwähnten Fingern passen, sodass die Handhabungsvorrichtung mit den Fingern zwischen den Stegen unter Stückgüter auf den Bändern greifen kann.

Schließlich ist hierbei bevorzugt, mit einer Handhabungsvorrichtung eine Mehrzahl parallel arbeitender Transportbänder zu 'bedienen'. Die Transportbänder wiederum können vorzugsweise Paternosterbänder mit zwei im Betrieb auftretenden Bewegungsrichtungen sein.

Die Mehrzahl Transportbänder sollen parallel arbeiten, also das zu einem bestimmten Flug zugehörige Gepäck (bzw. allgemein das Stückgut) auf eine Mehrzahl Bänder verteilt der Handhabungsvorrichtung anliefern und anbieten. Damit kann die Handhabungsvorrichtung entweder zwischen Gepäckstücken auf verschiedenen Bändern auswählen oder die Gepäckstücke auf den verschiedenen Bändern nach bestimmten festgelegten Verfahrensabläufen abarbeiten. Jedenfalls müssen die Transportbänder den zeitlichen Arbeitstakt der Handhabungsvorrichtung nicht identisch nachvollziehen. Sie können zudem auch als Pufferspeicher dienen, also größere Mengen Gepäck aufnehmen und zur darauf folgenden "Abarbeitung" zu der Handhabungsvorrichtung transportieren.

Die Transportbänder können vorteilhafterweise als Paternosterbänder aufgebaut sein, also so konstruiert sein, dass die Gepäckstücke an den Enden des Transportbandes an einer Umlenkstation aufrecht auf ein unteres Trum umgelenkt werden. Im Gegensatz zum Paternosteraufzug werden die erfindungsgemäßen Transportbänder im Regelfall langgestreckte horizontale Trume statt vertikaler Trume aufweisen. Hierdurch können die Gepäckstücke mit den Transportbändern in zwei Richtungen bewegt werden, um mehr Flexibilität zu erreichen. Das Transportband kann dann ohne Rücksicht auf "vor' dem gewünschten Gepäckstück stehende andere Gepäckstücke in der Richtung des jeweils kürzesten Weges zu der Abnahmestelle für die Handhabungsvorrichtung transportiert werden.

Im Folgenden wird die Erfindung anhand eines Ausführungsbeispiels näher erläutert, wobei die einzelnen Merkmale auch in anderen Kombinationen erfindungswesentlich sein können und sich, wie bereits erwähnt, implizit auf alle Kategorien der Erfindung beziehen.
- Figur 1 und 2: zeigen einen typischen Fluggepäckbehälter im Aufriss bzw. in Drauf- sicht.
- Figur 3: zeigt eine schematische Seitenansicht einer erfindungsgemäßen Handhabungsvorrichtung mit einem Fluggepäckbehälter gemäß den Figuren 1 und 2.
- Figur 4: zeigt einen Teil der Handhabungsvorrichtung aus Figur 3 in weiteren Einzelheiten.
- Figur 5: zeigt eine alternative Ausführungsform zu Figur 4 in einer ... Darstel- lung.
- Figuren 6a - c: zeigen in schematisierter Draufsicht weitere Einzelheiten zu der Handhabungsvorrichtung aus Figur 3.
- Figur 7: zeigt in schematisierter Draufsicht die Handhabungsvorrichtung aus Figur 3 in einer Flugfrachtverladeanlage.
- Figur 8: zeigt ein Detail zu der Anlage aus Figur 7.

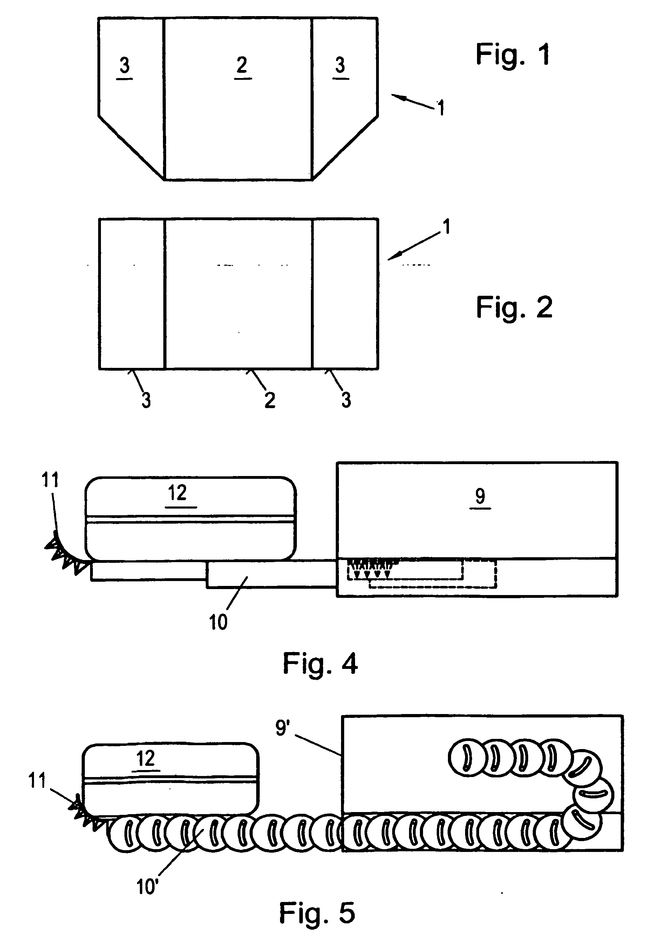

Die Figuren 1 und 2 zeigen einen typischen Fluggepäckbehälter 1. Dieser hat in der Aufrissdarstellung in Figur 1 eine rechteckige Form im Querformat mit schräg abgeschnittenen unteren Ecken, ist also insgesamt sechseckig. Dabei ist der mittlere eckige Bereich 2 offen und sind die seitlichen Bereiche 3 geschlossen. Die in Figur 1 nicht dargestellte Rückwand ist ganz geschlossen, die Seitenwände, der Boden und die Decke ebenfalls. Ein Grundproblem beim Beladen von Flugzeugen mit Fluggepäck besteht in einem effizienten Einladen der Gepäckstücke in einen solchen Behälter 1. Konventionell wird dies mit menschlicher Arbeitskraft händisch erledigt. Die Erfindung stellt eine hierfür ausgelegte Handhabungsvorrichtung zur Verfügung.

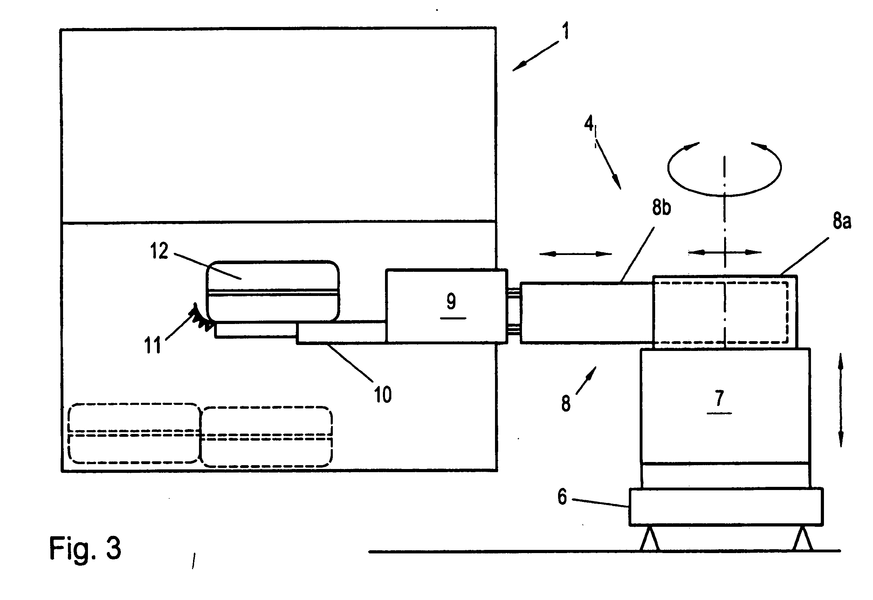

Diese Handhabungsvorrichtung ist in Figur 3 schematisch dargestellt und insgesamt mit 4 bezeichnet. Sie weist ein auf Schienen fahrendes Schienenfahrzeug 6 mit einem Hubturm 7 darauf auf, der vertikal verstellbar einen sich im Wesentlichen horizontal erstreckenden Hebelarm 8 trägt. Dieser Hebelarm 8 ist horizontal verschiebbar und um eine vertikale Achse drehbar. Er weist im Übrigen eine zweiteilige Konstruktion bestehend aus einem Haupthebelarm 8a und einem äußeren Hebelarm 8b auf. Dabei ist der äußere Hebelarm 8b gegenüber dem Haupthebelarm 8a in Hebelrichtung verschiebbar. Die Hebelarme bilden also insgesamt einen Teleskopmechanismus.

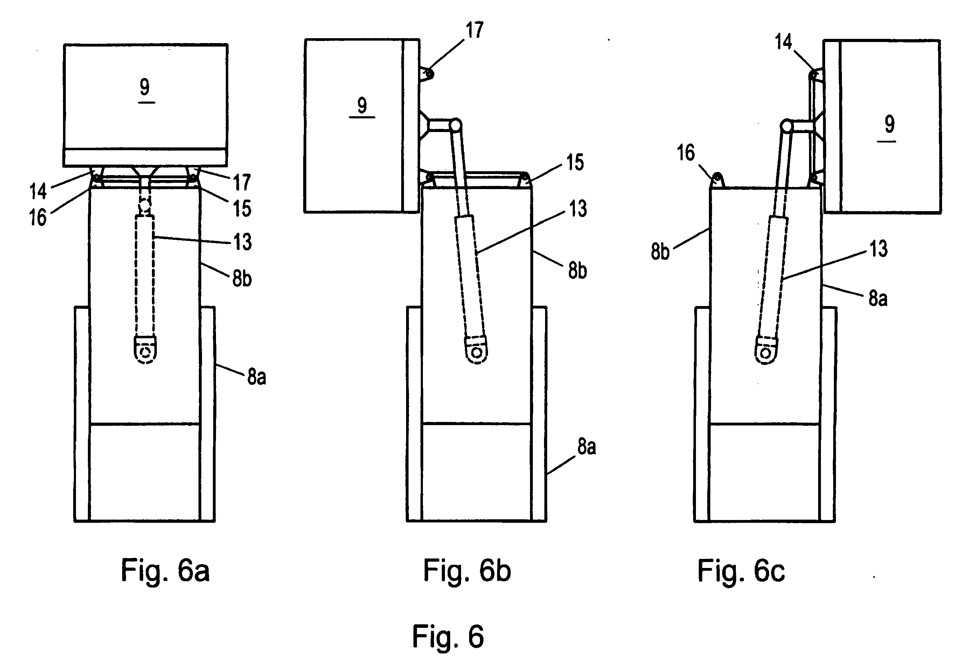

Am distalen Ende des äußeren Hebelarmes 8b ist ein Handhabungskopf 9 angebracht, und zwar über eine anhand der Figuren 6a - c noch näher erläuterte Doppelgelenkklappkonstruktion. Der Handhabungskopf 9 enthält teleskopartig aufgebaute Finger 10, die horizontal aus ihm heraus gefahren werden können, wie in Figur 3 dargestellt, aber auch vollständig in ihn zurückgezogen werden können.

Am distalen Ende der Finger 10 sind in Figur 3 dargestellte Krallen 11 angebracht. Sie bestehen im Wesentlichen aus einer unten balgähnlichen Konstruktion mit einem oben bandartigen Teil. Die Krallen 11 sind dabei pneumatisch aufblasbar, wobei sich der Balg durch die Luftfüllung aufdehnt und spreizt und damit eine Aufbiegung der Krallen 11 nach oben hervorruft. Im nicht aufgeblasenen Zustand sind sie näherungsweise horizontal, wie die gestrichelte Darstellung des eingefahrenen Fingers 10 in Figur 4 rechts zeigt.

Ferner sind die insgesamt neun Finger 10 einzeln ansteuerbar, also ein- und ausfahrbar. Das Gleiche gilt für die zugeordneten Krallen 11. Bei dem vorliegenden Ausführungsbeispiel ist der Fingersatz außerdem durch eine Verschiebung der jeweiligen Fingerkonstruktionen 10 auf senkrecht zur Zeichenebene verlaufenden Linearführungen in der Breite verstellbar.

Damit kann der Fingersatz 10 an unterschiedliche Gepäckstückbreiten angepasst werden.

Der Aufbau das Handhabungskopfes 9 mit den Fingern 10 und Krallen 11 ist in Figur 4 noch etwas größer dargestellt. Gestrichelt sieht man die eingefahrenen Finger 10.

Eine alternative Lösung für die Finger zeigt Figur 5 mit einer Gliederkette 10'. Hierbei handelt es sich um Kettenglieder, die aufgrund ihrer Form und Verbindung untereinander ein Aufrollen der Kette 10' nur in einer Richtung und bis zu einem bestimmten Minimalradius gestatten, während sie in der anderen Richtung sperren, also tragfähig sind. Dementsprechend können die Finger 10' in Gliederkettenbauform durch ein Aufwickeln in den Handhabungskopf 9' zurückgezogen werden und sind im ausgefahrenen Zustand durch Vertikalkräfte belastbar. Auch hier ist wieder eine Kralle 11 wie in Figur 4 vorgesehen.

Man erkennt anhand des schematisch dargestellten Koffers 12, dass die Finger 10 und 10' Gepäckstücke 12 tragen und die Handhabungsvorrichtung 4 insgesamt Gepäckstücke 12 bewegen kann. Auf die Einzelheiten dieser Bewegung wird im Folgenden eingegangen.

Die Figuren 6a - c zeigen eine Draufsicht auf die Handhabungsvorrichtung 4 aus Figur 3, wobei jedoch die Finger 10 mit den Krallen 11 eingezogen sind und wobei der Übersichtlichkeit halber nur der Haupthebelarm 8a und die daran angebrachten Teile gezeigt sind. Man erkennt einen Pneumatikzylinder 13, der in dem äußeren Hebelarm 8b vorgesehen ist. Dieser ist an den Handhabungskopf 9 angelenkt, und zwar mit einer im Folgenden näher erläuterten Doppelgelenkklappkonstruktion. Ein Gelenk 14 mit vertikaler Drehachse ist an einer dem äußeren Hebelarm 8b zugewandten Montageplatte des Handhabungskopfes 9 angebracht, ein zweites Gelenk 15 mit ebenfalls vertikaler Drehachse an einer handhabungskopfseitigen Frontfläche des äuβeren Hebelarms 8b. Beide Gelenke 14 und 15 sind durch jeweilige Verriegelungsmechanismen mit Verriegelungsstiften gegenüber jeweils zugeordneten Ansätzen 16 und 17 an der jeweils gegenüberliegenden Fläche verriegelbar und von diesen lösbar. Sind beide Gelenke 14 und 15 verriegelt, ist der Handhabungskopf 9 in Geradeausstellung arretiert, wie Figur 6a zeigt. Wird eine Verriegelung gelöst, kann der Handhabungskopf 9 durch Betätigung des Pneumatikzylinders 13 um das weiterhin verriegelte Gelenk geschwenkt werden, und zwar um +/- 90°. Hier sind natürlich durch einfache konstruktive Änderungen auch größere Winkel möglich.

Bei der Schwenkbewegung um das Gelenk 15 wird das Gelenk 14 mit ausgeschwenkt, weil es an der Montageplatte des Handhabungskopfes 9 montiert ist, wobei ein Gegenstück 16 für die Verriegelung fest an dem äußeren Hebelarm 8b bleibt. Umgekehrt wird bei der Schwenkbewegung um das Gelenk 14 das andere Gelenk 15 an dem äußeren Hebelarm 8b belassen, weil hier das entsprechende Verriegelungsgegenstück 17 an der Montageplatte des Handhabungskopfes 9 montiert ist.

Im Übrigen zeigt die Figur die bereits anhand Figur 3 erwähnte Längsverschiebbarkeit des äußeren Hebelarms 8b in dem Haupthebelarm 8a.

Insgesamt ist der Handhabungskopf 9 damit infolge des Hubturms 7 höhenverstellbar und infolge der Drehbarkeit des Haupthebelarms 8a und der radialen (in Bezug auf die Drehbewegung) Verfahrbarkeit des Haupthebelarms 8a und zusätzlich des äußeren Hebelarms 8b zweidimensional verstellbar. Die in den Figuren 6a - c dargestellte Doppelgelenkklappkonstruktion ermöglicht ein Abwinkeln des Handhabungskopfes 9 am distalen Ende der Hebelarme 8a, b. Damit kann man sich leicht vorstellen, dass der Handhabungskopf 9 einen wie in den Figuren 3 - 5 dargestellt getragenen Koffer 12 bei Geradeausstellung durch Ausfahren der Hebelarme 8a, b durch die Öffnung 2 in den Gepäckbehälter 1 hineinfahren kann und dann auf einer gewünschten Höhe beliebig absetzen kann. Hierbei kann der Koffer insbesondere durch Abschwenken in die "Seitenabteile" hinter den Wandstücken 3 verbracht werden. In der Zielposition angekommen werden die Finger 10 bzw. 10' eingezogen und der Koffer 12 damit abgestreift. Die Handhabungsvorrichtung 4 erlaubt damit eine sehr flexible und insbesondere innerhalb des Fluggepäckbehälters 1 sehr platzsparende motorische bzw. Roboterhandhabung von Gepäckstücken. Durch die Einziehbarkeit der Finger und zusätzlich durch das Zurückklappen in die Geradeausstellung nach Figur 6c kann der in dem Fluggepäckbehälter 1 befindliche Teil sehr schlank gemacht werden und sich nach Absetzen des Koffers 12 zurückziehen, ohne dabei unnötig andere Gepäckstücke zu berühren oder zu stören. Der Fluggepäckbehälter 1 kann dabei bis auf einen relativ schmalen Zugangskanal voll gepackt werden und schließlich dieser von hinten beginnend nach vorne voll gestellt werden. Letztlich ist der Fluggepäckbehälter 1 damit vollständig und sehr flexibel beladbar, ohne dass menschliche Arbeitskräfte für diese Aufgabe eingesetzt werden müssen. Die einfache Tragekonstruktion der Finger 10 und 10' ist dabei an die unterschiedlichsten Gepäckstücktypen angepasst. Da kein eigentlicher Greifvorgang stattfindet, sind die bei Gepäckstücken chronischen Probleme mit einem Verhaken und Verhängen von Einzelteilen praktisch irrelevant. Bei besonders "wackeligen" Gepäckstücken kann eine zusätzliche Sicherung durch das bereits beschriebene pneumatische (oder anderweitige) Ausfahren und Hochstülpen der Krallen 11 erfolgen.

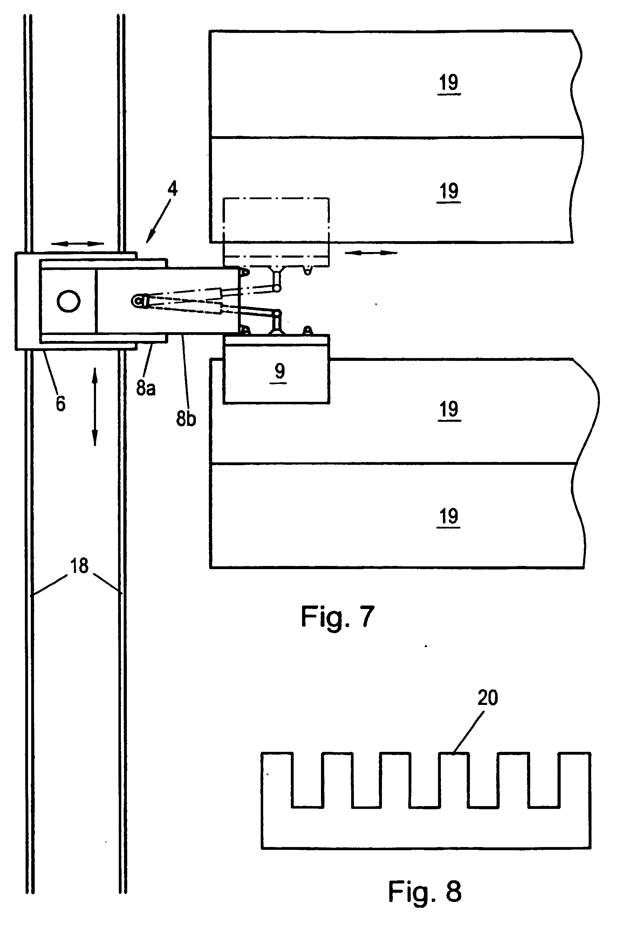

Figur 7 zeigt schließlich in einer schematisierten Draufsicht nicht nur die Handhabungsvorrichtung 4 aus Figur 3, hier ohne Fluggepäckbehälter 1, sondern auch einen zugehörigen Schienenweg 18, auf dem das Schienenfahrzeug 6 verfahrbar ist, und zwar in Bezug auf Figur 7 vertikal. Dabei fährt es zwischen den Enden (in Figur 7 den linken Enden) von Förderbändern 19 hin und her, die jeweils paarweise angeordnet sind. Dabei können die Hebelarme 8a, b den Handhabungskopf 9 zwischen die Enden der Förderbänder 19 bewegen, so dass der Handhabungskopf in den seitlich weggeschwenkten Stellungen jeweils seitlich an die Förderbänder 19 herankommt.

Bei diesen Förderbändern handelt es sich um paternosterartig, aber mit einer horizontalen Haupttransportrichtung, aufgebaute Förderbänder mit jeweils zu den Fingern 10 bzw. 10' passenden Stegoberflächen 20, wie in Figur 8 symbolisch gezeigt. Zu weiteren Einzelheiten wird verwiesen auf die PCT/EP2007/058591.

Die Lücken zwischen den Stegen sind dabei genau so bemessen, dass die Finger 10 dazwischen passen und auf den Oberkanten der Stege liegende Gepäckstücke abheben können, wenn der Hubturm 7 hochgefahren wird. In dieser Form können die Gepäckstücke (12 in Figur 3 - 5) von den Paternosterbändern abgehoben und nach einem Zurückfahren der Hebelarme 8a, b und Umschwenken um die vertikale Drehachse den auf der anderen Seite der Schienen, in Figur 7 links, vorhandenen Fluggepäckbehältern 1 zugeführt werden. Letztere können beispielsweise auf konventionellen Rollwagen heran- und weggefahren werden, um beladen und danach zu einem Flugzeug verbracht zu werden.

## Patentansprüche

1. Vorrichtung (4) zum Handhaben von Stückgütern (12) mit einer Untergreifeinrichtung (10, 10'),
**dadurch gekennzeichnet, dass** die Untergreifeinrichtung (10, 10'), aus der Handhabungsvorrichtung (4) seitlich ausfahrbar und in die liandhabungsvvrrichtung (4) einfahrbar ist.

2. Vorrichtung (4) nach Anspruch 1, bei der die Untergreifeinrichtung (10, 10') eine Mehrzahl parallele Finger (10, 10') aufweist.

3. Vorrichtung (4) nach Anspruch 1 oder 2, bei der die Untergreifeinrichtung (10, 10') in ihrer Breite quer zur Ein- und Ausfahrrichtung der Untergreifeinrichtung (10, 10') verstellbar ist.

4. Vorrichtung (4) nach Anspruch 2 und 3, bei der die Abstände zwischen den Fingern (10, 10') in der Breitenrichtung zu der Breltenverstellung der Untergreifeinrichtung (10, 10') verstellbar sind.

5. Vorrichtung (4) nach Anspruch 2. auch in Verbindung mit Anspruch 3 oder 4, bei der die Finger (10, 10') gruppenweise ein- und ausfahrbar sind.

6. Vorrichtung (4) nach Anspruch 2, auch in Verbindung mit einem der Anspruche 3 - 5, bei der die Finger (10, 10') jeweils einen Teleskopmechanismus aufweisen und **dadurch** ein- und ausfahrbar sind.

7. Vorrichtung (4) nach Anspruch 2, auch in Verbindung mit einem der Ansprüche 3 - 5, bei der die Finger einseitig rollbare Gliederketten (10') aufweisen und **dadurch** ein- und ausfahrbar sind.

8. Vorrichtung nach Anspruch 6 oder 7. bei der am distalen Ende zumindest eines Teils der Finger (10, 10') jeweils eine nach oben gebogene Kralle (11) ausfahrbar ist.

9. Vorrichtung (4) nach Anspruch 8, bei der die Kralle (11) pneumatisch ein- und ausfahrbar ist und einen Faltenbalg aufweist.

10. Vorrichtung (4) nach einem der vorstehenden Ansprüche mit einem Hebelarm (8) und einem Handhabungskopf (9, 9'), welcher Handhabungskopf (9. 9') die Untergreifeinrichtung (10, 10') aufweist und schwenkbar an dem Hebelarm (8) gelagert ist.

11. Vorrichtung (4) nach Anspruch 10, bei der der Handhabungskopf (9, 9') zweiseitig jeweils mit einem Gelenk (14, 15) mit vertikaler Achse gelagert ist und eines der Gelenke (14) bei einer Schwenkbewegung um das andere (15) mit verschwenkt wird.

12. Vorrichtung (4) nach Anspruch 11 mit einer Verriegelung (16, 17) in beiden Gelenken (14, 15), durch die jeweils eines der Gelenke (14, 15) verriegelt werden kann, wobei die Schwenkbewegung mit einem gemeinsamen Antriebszylinder (13) für beide Gelenke (13,14) erzeugbar ist

13. Vorrichtung (4) nach einem der vorstehenden Ansprüche mit einem Hebelarm (8) und einem Handhabungskopf (9, 9'), welcher Handhabungskopf (9, 9') die Untergreifeinrichtung (10. 10') aufweist, und ferner mit einem Schienenwagen (6), an dem der Hebelarm (8) montiert ist und mit dem die Vorrichtung (4) auf einem Boden horizontal verfahren werden kann.

14. Vorrichtung (4) nach Anspruch 13, bei der auf dem Schienenwagen (6) ein vertikal verstellbarer Hubturm (7) montiert ist, an dem der Hebelarm (8) montiert ist.

15. Vorrichtung (4) nach Anspruch 13 oder 14, bei der der Hebelarm (8) horizontal verläuft und um eine vertikale Achse drehbar ist.

16. Vorrichtung (4) nach Anspruch 15, bei der der Hebelarm (8) horizontal ein- und ausfahrbar ist.

17. Verwendung einer Vorrichtung (4) nach einem der vorstehenden Ansprüche in einer Anlage zum Transport der Stückgüter, welche Anlage Transportbänder (19) aufweist, von denen die Stückgüter (12) durch die Handhabungsvorrichtung (4) abgenommen werden können.

18. Verwendung nach Anspruch 17 einer Vorrichtung (4) nach Anspruch 13, bei der der Schienenwagen (6) senkrecht zu der Bänderlaufrichtung beweglich ist.

19. Verwendung nach Anspruch 17 oder 18, bei der die Stückgüter Flugfracht, insbesondere Fluggepäck (12), sind.

20. Anlage zum Verladen von Flugfracht (12) mit einer Vorrichtung (4) nach einem der Ansprüche 1 - 16 und mit Transportbändern (19), von denen Flugfracht (12) durch die Handhabungsvorrichtung (4) abgenommen werden können.

21. Anlage nach Anspruch 20 mit einer Vorrichtung nach Anspruch 2, bei der die Bänder (19) Stegoberflächen (20) aufweisen, die zu den Fingern (10, 10') der Untergreifeinrichtung passen.

22. Anlage nach Anspruch 20 oder 21 mit einer Mehrzahl parallel arbeitender Transportbänder (19) zum Transportieren des Stückguts (12) und einer Vorrichtung (4) nach einem der Ansprüche 1 - 16 zum Einladen der von der Mehrzahl Transportbänder (19) antransportierten Stückgüter (12) in einen Behälter (1),

23. Anlage nach einem der Ansprüche 18 - 22, bei der die Transportbänder Patemosterbänder (19) sind und während des Transports der Stückgüter (12) zu der Handhabungsvorrichtung (4) mit zwei Bewegungsrichtungen betreibbar sind.

## Claims

1. An apparatus (4) for manipulating part-load (12) having an under-gripping device (10, 10'),
**characterized in that** said under-gripping device (10, 10') is extendable from said manipulating device (4) sideways and retractable into said manipulating device (4) such that part-load (12) lying on said under-gripping device (10, 10') can be stripped-off by retracting into said manipulating device (10, 10').

2. The apparatus (4) of claim 1 wherein said under-gripping device (10, 10') comprises a plurality of parallel fingers (10, 10').

3. The apparatus (4) of claim 1 or 2 wherein said under-gripping device (10, 10') is adjustable in its width perpendicularly to a retraction and extension direction of said under-gripping device (10, 10').

4. The apparatus (4) of claim 2 or 3 wherein distances between said fingers (10, 10') in the direction of said width are adjustable for a width adjustment of said under-gripping device (10, 10').

5. The apparatus (4) of claim 2, also in combination with claim 3 or 4, wherein said fingers (10, 10') are retractable and extendable group-wise.

6. The apparatus (4) of claim 2, also in combination with one of claims 3 - 5, wherein said fingers (10, 10') comprise a telescopic mechanism, respectively, and are retractable and extendable thereby.

7. The apparatus (4) of claim 2, also in combination with one of claims 3 - 5 wherein said fingers comprise link chains (10') rollable to one side and retractable and extendable thereby.

8. The apparatus (4) of claim 6 or 7 wherein a claw (11) bent upwardly is extendable from at least a part of said fingers (10, 10') at their distal end, respectively.

9. The apparatus (4) of claim 8 wherein said claw (11) is retractable and extendable pneumatically and comprises expansion bellows.

10. The apparatus (4) of one of the preceding claims having a lever arm (8) and a manipulating head (9, 9'), which manipulating head (9, 9') comprises said under-gripping device (10, 10') and is supported on said lever arm (8) in a pivotable manner.

11. The apparatus (4) of claim 10 wherein said manipulating head (9, 9') is supported on two sides by an articulation (14, 15), respectively, having a vertical axis and one of said articulations (14) is pivoted around the other one (15) in a pivoting movement.

12. The apparatus (4) of claim 11 having a latch (16, 17) in both articulations (14, 15) whereby one respective of said articulations (14, 15) can be latched, wherein said pivoting movement can be produced by one common driving cylinder (13) for both articulations (13, 14).

13. The apparatus (4) of one of the preceding claims having a lever arm (8) and a manipulating head (9, 9'), which manipulating head (9, 9') comprises said under-gripping device (10, 10'), and further a rail waggon (6), to which said lever arm (8) is mounted and whereby said apparatus (4) can be displaced horizontally on a floor.

14. The apparatus (4) of claim 13 wherein a vertically adjustable lift tower (7) is mounted on said rail waggon (6), on which said lever arm (8) is mounted.

15. The apparatus (4) of claim 13 or 14 wherein said lever arm (8) extends horizontally and is rotatable around a vertical axis.

16. The apparatus (4) of claim 15 wherein said lever arm (8) is retractable and extendable horizontally.

17. A use of the apparatus (4) of one of the preceding claims in a plant for transporting said part-load, said plant comprising transport belts (19) wherefrom said part-load (12) can be taken-off by said manipulating apparatus (4).

18. The use of claim 17 wherein said rail waggon (6) is moveable perpendicularly to a running direction of said belts.

19. The use of claim 17 or 18 wherein said part-load is flight load, in particular flight luggage (12).

20. A plant for loading flight load (12) by means of the apparatus (4) of one of claims 1 - 16 and of transport belts (19) wherefrom flight load (12) can be taken-off by said manipulating apparatus (4).

21. The plant of claim 20 comprising the apparatus of claim 2 wherein said belts (19) have rib surfaces (20) adapted to said fingers (10, 10') of said under-gripping device.

22. The plant of claim 20 or 21 having a plurality of transport belts (19) working in parallel, for transporting said part-load (12), and the apparatus (4) of one off claims 1 - 16 for loading said part-load (12) transported thereto by said plurally of transport belts (19) into a container (1).

23. The plant of one of claims 18 - 22 wherein said transport belts are paternoster belts (19) and can be operated in two movement directions during said transport of said part-load (12) to said manipulating apparatus (4).

## Revendications

1. Dispositif (4) pour la manutention de marchandise au détail (12) comprenant un dispositif de prise par le bas (10, 10'),
**caractérisé en ce que** le dispositif de prise par le bas (10, 10') peut être sorti latéralement du dispositif de manutention (4) et entré dans le dispositif de manutention (4), de façon à ce que la marchandise au détail (12) reposant sur le dispositif de prise par le bas (10, 10') soit enlevée par l'entrée du dispositif de prise par le bas (10, 10').

2. Dispositif (4) selon la revendication 1, dans lequel le dispositif de prise par le bas (10, 10') présente une pluralité de doigts (10, 10') parallèles.

3. Dispositif (4) selon la revendication 1 ou 2, dans lequel le dispositif de prise par le bas (10, 10') est réglable dans sa largeur transversalement à la direction d'entrée et de sortie du dispositif de prise par le bas (10, 10').

4. Dispositif (4) selon les revendications 2 et 3, dans lequel les écarts entre les doigts (10, 10') dans le sens de la largeur sont réglables pour régler la largeur du dispositif de prise par le bas (10, 10').

5. Dispositif (4) selon la revendication 2, également en liaison avec les revendications 3 ou 4, dans lequel les doigts (10, 10') peuvent être entrés ou sortis par groupe.

6. Dispositif (4) selon la revendication 2, également en liaison avec les revendications 3 à 5, dans lequel les doigts (10, 10') présentent respectivement un mécanisme télescopique et peuvent ainsi être entrés ou sortis.

7. Dispositif (4) selon la revendication 2, également en liaison avec les revendications 3 à 5. dans lequel les doigts présentent des chaînes à maillons (10') qui peuvent rouler d' un côté et peuvent ainsi être entrés ou sortis.

8. Dispositif selon l'une des revendications 6 ou 7, dans lequel une griffe (11) courbée vers le haut peut être sortie sur l'extrémité distale d'au moins une partie des doigts (10, 10').

9. Dispositif (4) selon la revendication 8, dans lequel la griffe (11) peut être entrée ou sortie de manière pneumatique et présente un soufflet.

10. Dispositif (4) selon l'une des revendications précédentes comprenant un bras de levier (8) et une tête de manutention (9, 9'), laquelle tête de manutention (9, 9') présente le dispositif de prise par le bas (10, 10') et est placée de manière pivotante sur le bras de levier (8).

11. Dispositif (4) selon la revendication 10, dans lequel la tête de manutention (9, 9') est positionnée des deux côtés respectivement avec une articulation (14, 15) avec un axe vertical et l'une des articulations (14) est basculée sur l'autre (15) lors d'un basculement.

12. Dispositif (4) selon la revendication 11, comprenant un verrou (16, 17) dans les deux articulations (14, 15) par lequel l'une des articulations (14, 15) peut être respectivement verrouillée, sachant que le basculement peut être produit avec un cylindre d'entraînement (13) commun aux deux articulations (14, 15).

13. Dispositif (4) selon l'une des revendications précédentes comprenant un bras de levier (8) et une tête de manutention (9, 9'), laquelle tête de manutention (9, 9') présente le dispositif de prise par le bas (10, 10') et en outre un chariot (6) sur lequel le bras de levier (8) est monté et avec lequel le dispositif (4) est mobile horizontalement sur un sol.

14. Dispositif (4) selon la revendication 13, dans lequel une flèche de levage (7) réglable verticalement est montée sur le chariot (6), sur laquelle le bras de levage (8) est monté.

15. Dispositif (4) selon la revendication 13 ou 14, dans lequel le bras de levage (8) s'étendre horizontalement et est rotatif sur un axe vertical.

16. Dispositif (4) selon la revendication 15, dans lequel le bras de levage (8) peut être entré et sorti horizontalement.

17. Emploi d'un dispositif (4) selon l'une des revendications précédentes dans une installation de transport de marchandise au détail, laquelle installation présente des bandes transporteuses (19) desquelles la marchandise au détail (12) peut être enlevée par le dispositif de manutention (4).

18. Emploi selon la revendication 17 d'un dispositif (4) selon la revendication 13, dans lequel le chariot (6) est mobile verticalement par rapport au sens des bandes.

19. Emploi selon la revendication 17 ou 18, dans lequel les marchandises au détail sont du fret aérien, en particulier des bagages transportés par avion (12).

20. Installation pour le chargement de fret aérien (12) comprenant un dispositif (4) selon l'une des revendications 1 à 16 et des bandes transporteuses (19) desquelles le fret aérien (12) peut être enlevé par le dispositif de manutention (4).

21. Installation selon la revendication 20 comprenant un dispositif selon la revendication 2, dans lequel les bandes (19) présentent des surfaces de traverses (20) qui s'adaptent aux doigts (10, 10') du dispositif de prise par le bas.

22. Installation selon la revendication 20 ou 21 comprenant une pluralité de bandes transporteuses (19) fonctionnant en parallèle pour transporter la marchandise au détail (12) et un dispositif (4) selon l'une des revendications 1 à 16 pour charger dans un contenant (1) la marchandise au détail (12) amenée par la pluralité de bandes transporteuses (19).

23. Installation selon l'une des revendications 18 à 22, dans laquelle les bandes transporteuses sont des bandes de type pater-noster (19) et peuvent être utilisées avec deux sens de déplacement pendant le transport de la marchandise au détail (12) vers le dispositif (4).
